# EUROPÄISCHE PATENTSCHRIFT

(11) **EP 1 170 060 B1**
(45) Veröffentlichungstag und Bekanntmachung des Hinweises auf die Patenterteilung: **28.08.2002**
(21) Anmeldenummer: 00113342.0
(22) Anmeldetag: 23.06.2000
(51) Int. Cl.: B05B 5/08, B05B 13/02, A23P 1/08

(54) **Verfahren zum elektrostatischen Aufsprühen von Flüssigkeit und Trockenstoffen mittels Besprühungsdüse auf Speiseprodukte**
Method for electrostatic spraying liquid and dry material onto foodstuffs by means of spray nozzles
Procédé de pulvérisation électrostatique de liquide et de produit sec sur des produits alimentaires au moyen de buses de pulvérisation

(43) Veröffentlichungstag der Anmeldung: 09.01.2002
(73) Patentinhaber: FRoSTA Aktiengesellschaft, 27572 Bremerhaven (DE)
(72) Erfinder: Opel, Henry, 01623 Lommatzsch (DE)
(74) Vertreter: von Raffay, Vincenz, Dipl.-Ing.

(56) Entgegenhaltungen:
- EP-A- 0 231 817
- US-A- 4 702 932
- US-A- 5 698 252

## Beschreibung

Die Erfindung betrifft ein Verfahren zum elektrostatischen Aufsprühen von Flüssigkeit und Trockenstoffen mittels Besprühungsdüsen auf Speiseprodukte nach dem Oberbegriff des Hauptanspruches.

Ein derartiges Verfahren ist aus der EP-A-231 817 bekannt, das sich jedoch auf Formlinge bezieht und beliebige Korndurchmesser im Bereich von 0,2 mm bis hin zu 0,08 mm fordert.

Ferner sind Verfahren dieser Art zum Beispiel aus der DE-C2 44 14 513 und aus der EP-A1-0 498 155 bekannt. Diese vorbekannten Verfahren und Systeme beschäftigen sich mit der gleichmäßigen Aromastoffbeschichtung auf Speiseprodukten wie Kartoffel-Chips, Kornchips, Kartoffelprodukten, Getreideflocken und ähnlichem. Schon im Stand der Technik werden die Probleme der Pulveranhäufung und der unangenehmen Konzentration von Aromapulver an den Speisesnacks beschrieben, was durch gepulste Schlauchspülung oder unterschiedlichen Druck in verschiedenen Rohrkörpern verhindert werden soll. Die vorbekannten Verfahren und Systeme richten sich im Prinzip auf trockene Speiseprodukte, weshalb die Problematik von Beschichtungen von feuchten oder gar gefrorenen Speiseprodukten nicht angesprochen wird.

Der Erfindung liegt das Problem zugrunde, nicht nur eine gleichmäßige Verteilung von Soßenemulsionen und Trockenstoffen, wie Aroma- und Gewürzstoffen nebst Bindemittel (inneres Bindemittel für die spätere Soße, jedoch kein Haftvermittler), auf gefrorenen Speiseprodukten zu erzielen, um schwankende Geschmacksintensitäten innerhalb einer Erzeugnisportion zu vermeiden, sondern ebenfalls eine kontinuierliche Arbeitsweise ohne Verklumpungen an der Besprühungsdüse und erhebliche Nebelentwicklung durch die Soßenemulsion und/oder Trockenstoffe im freien Fall, vorzugsweise in einer Trommel zu ermöglichen.

Die Lösung dieser Aufgabe wird durch das Verfahren gemäß Anspruch 1 gelöst.

Das erfindungsgemäße Verfahren ermöglicht also das Beschichten von gefrorenen Speiseprodukten, wie gefrorenem Gemüse, Fleisch, Fisch, Obst, Teigwaren, Reis, die in unterschiedlichem Ausmaß feucht sein und ebenfalls unterschiedliche Größen aufweisen können. Im Gegensatz zur nicht-elektrostatischen Beschichtung verhält sich bei der erfindungsgemäßen elektrostatischen Verfahrens- und Beschichtungsweise das Ladungspotential der Elektrode proportional zur Masse, so daß große und spezifisch dichtere Partikel der Speiseprodukte mehr Soßenauftrag erhalten als kleine bzw. spezifisch leichtere Partikel. Gerade dieses Ladungsverhalten trägt dazu bei, daß schwankende Geschmacksintensitäten innerhalb einer Produktportion sicher vermieden werden.

Im folgenden wird ein Ausführungsbeispiel anhand der Zeichnung näher erläutert, die dem besseren Verständnis der Erfindung dienen soll, worauf die Erfindung jedoch nicht beschränkt ist.

Es zeigt:
- Fig. 1: eine Schemaskizze des Systems zur Durchführung des erfindungsgemäßen Verfahrensablaufes; und
- Fig. 2: einen Querschnitt durch die in Fig. 1 gezeigte Trommel.

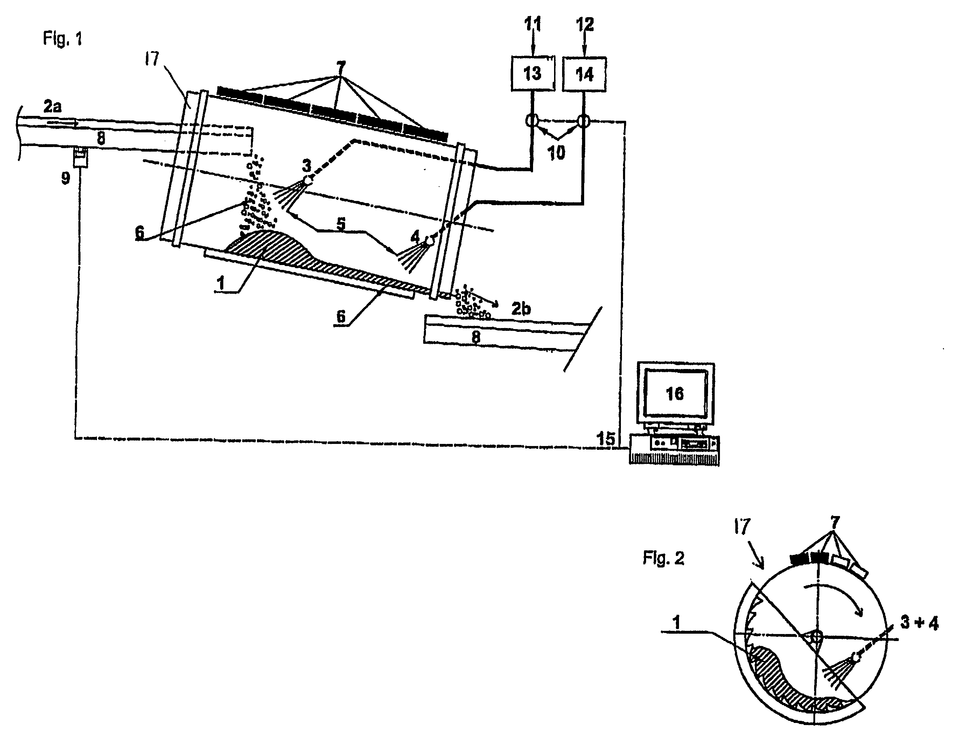

In den Figuren ist das erfindungsgemäße Verfahren anhand seiner vorrichtungsgemäßen Merkmale aufgezeigt. Mit 1 ist das Speiseprodukt bezeichnet, bei dem es sich um gefrorenes Gemüse handelt. Andere gefrorene Speiseprodukte können jedoch mit dem erfindungsgemäßen Verfahren ebenso behandelt werden. Das gefrorene Gemüse wird über einen Schwingförderer 8 einer sich drehenden zylindrischen Trommel 17 kontinuierlich zugeführt und ist auf dem Schwingförderer 8 mit dem Bezugszeichen 2a versehen, während es als tiefgekühltes besprühtes Produkt 2b die Trommel 17 am rechtsseitigen Ende verläßt, wo es auf einem Schwingförderer zur Verpackung abtransportiert wird. Mit 7 sind in den Fig. 1 und 2 die Temperatursteuerungselemente für die Drehtrommel 17 bezeichnet, die entweder geheizt oder gekühlt werden kann. Die Besprühung mit der Soßenemulsion erfolgt durch die Besprühungsdüse 3, die auf das vom Schwingförderer 8 herunterfallende tiefgekühlte Produkt 2a gerichtet ist und dieses mit der flüssigen Emulsion 11 überzieht. Mit dem Bezugszeichen 5 ist die negative Ladung angedeutet, die der Soßenemulsion 11 verliehen wird, während mit 6 die positive Ladung der tiefgekühlten Produkte 2a angedeutet ist. Das mit der Soßenemulsion 11 besprühte Produkt 2a sammelt sich als Speiseprodukt 1 auf dem Boden der geneigt liegenden Trommel 17, wo es zur rechten Seite hin rutscht und dort erst durch die Besprühungsdüse 4 mit den Trockenstoffen 12 besprüht wird. Auch hier besitzen die Trockenstoffe 12 eine elektrostatisch negative Ladung 5, während das mit der Soßenemulsion 11 versehene Speiseprodukt 1 eine positive Ladung 6 aufweist.

Es dürfte einleuchten, daß statt einer Soßenemulsion auch der Einsatz einer Soßenflüssigkeit, wie Soßensuspension, Wasser und/oder Fett vorgenommen werden kann.

Beim erfindungsgemäßen Verfahren ist es von Bedeutung, daß die Soßenemulsion 11 getrennt von den Trockenstoffen 12 aufgesprüht wird, wobei letztere einen einheitlichen Korndurchmesser von beispielsweise ca. 0,5 mm (bei mehlartigen Produkten sind auch kleinere Partikelgrößen denkbar; andere vorteilhafte Größen liegen im Bereich von 0,4 bis 0,6 mm) aufweisen sollten. Wichtig ist die Einheitlichkeit der Korngröße. Hierzu wird ein Homogenisator 13 und die Trockenstoffvorlage 14 vorgesehen, die jeweils eine geeignete Messvorrichtung 10 aufweisen, die in der jeweiligen Leitung zur Besprühungsdüse 3 bzw. 4 liegen. Diese Messvorrichtungen 10 sind über eine Leitung 15 mit dem Rechner 16 für die Meß-, Steuer- und Regeltechnik verbunden. Ferner ist im Zuführbereich der Speiseprodukte 2a der Schwingförderer 8 mit einer Wiegevorrichtung 9 versehen, die ebenfalls über eine Steuerleitung mit dem Rechner 16 verbunden ist.

## Patentansprüche

1. Verfahren zum elektrostatischen Aufsprühen von Flüssigkeit und Trockenstoffen (12) mittels Besprühungsdüsen (3,4) auf Speiseprodukte (2a,1), die sich im freien Fall auf denselben anlagern, wobei eine Soßenflüssigkeit, -emulsion oder -suspension (11) gebildet wird, die in einem Homogenisator (13) ohne feste Bestandteile hergestellt und separat von den Trockenstoffen (12) aufgesprüht wird, und wobei die Menge der zugeführten Speiseprodukte (2a) einerseits und die der Soßenflüssigkeit, -emulsion oder -suspension (11) und die der Trockenstoffe andererseits über Wiege- bzw. Messvorrichtungen (9,10) von einem Rechner (16) in festgelegten Zeitintervallen abgefragt, überwacht und gesteuert werden, **dadurch gekennzeichnet, daß** die Speiseprodukte Gemüse, Fleisch, Fisch, Obst, Teigwaren, Reis darstellen, die frei rollend und gefroren sind, die einzeln oder über eine Mischanlage kontinuierlich gemischt werden und in einem Vorratsbehälter als Mischung bevorratet werden und wobei die Trockenstoffe einen einheitlichen Korndurchmesser im Bereich von 0,1 bis 0,7 mm aufweisen.

2. Verfahren nach einem oder mehreren der vorstehenden Ansprüche, **dadurch gekennzeichnet, daß** die Speiseprodukte (2a) über einen Schwingförderer (8) mit Wiegezelle (9) in die Besprühtrommel (17) gefördert werden, wobei es sich um einen liegenden offenen Zylinder handelt, der beheizbar oder kühlbar ist.

3. Verfahren nach einem oder mehreren der vorstehenden Ansprüche, **dadurch gekennzeichnet, daß** die Speiseprodukte im inneren einer sich drehenden Trommel (17) an Kenterleisten durchwirbelt werden.

4. Verfahren nach einem oder mehreren der vorstehenden Ansprüche, **dadurch gekennzeichnet, daß** die Trockenstoffe (12) mittels eines Luftstromes der Besprühdüse (4) zugeführt werden.

5. Verfahren nach einem oder mehreren der vorstehenden Ansprüche, **dadurch gekennzeichnet, daß** sich das Ladungspotential der Elektrode proportional zur Masse verhält, so daß große und spezifisch dichtere Partikel der Speiseprodukte mehr Soßenauftrag erhalten, als kleine bzw. spezifisch leichtere Partikel, wodurch gleichmäßige Geschmacksintensitäten innerhalb eine Produktportion eingestellt werden.

## Claims

1. Method for the electrostatic spraying by means of spraying nozzles (3, 4) of liquid and dry substances (12) onto food products (2a, 1) and attached thereto in free fall, a sauce liquid, emulsion or suspension (11) being formed, which is produced in a homogenizer (13) without solid constituents and is sprayed separately from the dry substances (12), and in which the quantity of the supplied food products (2a) on the one hand and that of the sauce liquid, emulsion or suspension (11) and the dry substances on the other is polled, monitored and controlled at fixed time intervals from a computer (16) by means of weighing or measuring devices (9, 10), **characterized in that** the food products are vegetables, meat, fish, fruit, pasta products and rice, which are in free rolling and frozen form and continuously mixed individually or by means of a mixing plant and which are stored as a mixture in a storage tank, the dry substances having a uniform particle size in the range 0.1 to 0.7 mm.

2. Method according to claim 1, **characterized in that** the food products (2a) are conveyed by means of a vibrating conveyor (8) with weighing cell (9) into the spraying drum (17), which is a horizontally positioned, open cylinder, which can be heated or cooled.

3. Method according to one or more of the preceding claims, **characterized in that** the food products are whirled up on canting strips within a rotating drum (17).

4. Method according to one or more of the preceding claims, **characterized in that** the dry substances (12) are supplied to the spraying nozzle (4) by means of an air flow.

5. Method according to one or more of the preceding claims, **characterized in that** the charge potential of the electrode behaves in proportional manner to the mass, so that the large and specifically denser particles of the food products receive a larger sauce application than small or specifically lighter particles and as a result uniform taste intensities are set within a product portion.

## Revendications

1. Procédé de pulvérisation électrostatique de liquide et de produits secs (12) au moyen de buses de pulvérisation (3, 4) sur des produits alimentaires (2a, 1) qui se déposent sur ces derniers en chute libre, un liquide ou une émulsion ou une suspension de sauce (11) étant ainsi formé, qui est fabriqué sans composants solides dans un homogénéisateur (13) et pulvérisé séparément des produits secs (12) et moyennant quoi la quantité de produits alimentaires ajoutés (2a), d'une part, et la quantité de liquide ou d'émulsion ou de suspension de sauce (11), et la quantité de produits secs, d'autre part, sont appelées, contrôlées et commandées par un ordinateur (16) à intervalles déterminés par l'intermédiaire de dispositifs de pesage ou de mesure (9, 10), **caractérisé en ce que** les produits alimentaires sont constitués de légumes, de viande, de poisson, de fruits, de pâtes alimentaires, de riz, qui roulent librement et qui sont congelés et qui sont continuellement mélangés individuellement ou par une installation de mélange et approvisionnés comme mélange dans un réservoir de stockage et moyennant quoi les produits secs présentent un diamètre de grain uniforme compris entre 0,1 et 0,7 mm.

2. Procédé selon une ou plusieurs des revendications précédentes, **caractérisé en ce que** les produits alimentaires (2a) sont transportés dans le tambour de pulvérisation (17) par un transporteur oscillant (8) muni d'une cellule de pesage (9), moyennant quoi il s'agit d'un cylindre horizontal ouvert qui peut être chauffé ou refroidi.

3. Procédé selon une ou plusieurs des revendications précédentes, **caractérisé en ce que** les produits alimentaires sont brassés violemment contre des listels de renversement dans un tambour rotatif (17).

4. Procédé selon une ou plusieurs des revendications précédentes, **caractérisé en ce que** les produits secs (12) sont alimentés par un courant d'air de la buse d'aspersion (4).

5. Procédé selon une ou plusieurs des revendications précédentes, **caractérisé en ce que** le potentiel de charge de l'électrode est proportionnel à la masse de sorte que des particules grosses et spécifiquement plus denses des produits alimentaires reçoivent plus de sauce que des particules petites ou spécifiquement plus légères, moyennant quoi des intensités de goût homogènes sont ajustées dans une portion de produit.
